# EUROPEAN PATENT APPLICATION

(11) **EP 4 556 327 A1**
(43) Date of publication of application: **21.05.2025**
(21) Application number: 23210142.8
(22) Date of filing: 15.11.2023
(51) Int. Cl.: B60T 13/04, B60T 13/26, B60T 13/38, B60T 17/18

(54) **ELECTRONICALLY CONTROLLED PNEUMATIC PARK BRAKE SYSTEM, VEHICLE COMPRISING SUCH A SYSTEM AND METHOD FOR CONTROLLING SUCH A SYSTEM**

(71) Applicant: VOLVO TRUCK CORPORATION, 405 08 Göteborg (SE)
(72) Inventor: Farres, Lionel, 38540 Heyrieux (FR); Bebon, Hugo, 69800 Saint-Priest (FR); Monnier, Martin, 69600 Oullins (FR)
(74) Representative: Lavoix

(57) **Abstract**

An electronically controlled pneumatic parking brake system (2) comprises a park brake actuator (9), first and second electronic control units (10, 70) and an electronic park brake device (6) comprising a bi-stable relay valve (14) selectively feeding the park brake actuator (9), solenoid valves (40, 42) for controlling the relay valve via a control line (30) and at least one backup pneumatic park brake valve (52) configured to take first and second configurations. The parking brake system (2) also comprises a third solenoid valve (62), controlling the backup park brake valve (52), and a fourth solenoid valve (82) selectively connecting the control line (30) to the backup park brake valve (52). The first electronic control unit (10) pilots the fourth solenoid valve (82) to isolate the control line (30) from the backup park brake valve (52) if the third solenoid valve controls the backup park brake valve to take a second configuration when the first electronic control unit is operational.

## Description

### TECHNICAL FIELD

The disclosure relates generally to vehicles. In particular aspects, the disclosure relates to an electronically controlled pneumatic parking brake system for a vehicle. The disclosure also relates to a vehicle comprising such an electronically controlled pneumatic parking brake system and to a method for electronically controlling a pneumatic parking brake system. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In the field of automotive vehicles, a parking brake function relies more and more on an electronic park brake device, also called EPB, using air under pressure as a working fluid. An electronic control unit, also called ECU, of the EPB requires electric power to operate. In case of failure of an electric power supply to the control unit or in case of a dysfunction in the control unit, some electrically controlled components of the EPB, such as solenoid-valves, cannot be correctly actuated. Then, the parking brake function is not available and the vehicle cannot be immobilized.

This problem is important for vehicles with a driver onboard. It is crucial for driverless vehicles and remotely driven vehicles, which require a high safety level to ensure smooth and secure traffic.

Moreover, if a safety function can be triggered to react to a situation when an electronic control unit potentially does not work properly, this should not prevent the parking brake system to work properly when the ECU is operational.

Thus, there is a need for a control system capable of ensuring a parking brake function, also in case of electrical failure or in case a safety function is triggered when an ECU is operational, especially for driverless and remotely driven vehicles.

### SUMMARY

According to a first aspect of the disclosure, the invention relates to an electronically controlled pneumatic parking brake system for a vehicle,
wherein said system comprises
- at least one park brake actuator;
- a first electronic control unit;
- a second electronic control unit;
- an electronic park brake device controlled by the first electronic control unit and comprising
   - at least one bi-stable relay valve configured for selectively feeding the at least one park brake actuator with air under pressure;
   - a source of air under pressure for feeding air under pressure to each bi-stable relay valve, via a respective supply line;
   - at least one pair of first and second solenoid valves piloted by the first electronic control unit for controlling the bi-stable relay valve via a control line;
   - at least one backup pneumatic park brake valve configured to take, depending on the pressure within the source of air under pressure, a first configuration where it isolates the control line from the outside and a second configuration where it purges the control line to the atmosphere;
- a third solenoid valve, external to the electronic park brake device, piloted by the second electronic control unit, fed by air from the source of air under pressure and configured to control the backup pneumatic park brake valve for switching between its first and second configurations;
- a fourth solenoid valve, piloted by the first electronic control unit and which selectively connects the control line to the backup park brake valve;
wherein the first electronic control unit is configured to pilot the fourth solenoid valve to isolate the control line from the backup park brake valve if the third solenoid valve is controlling the backup pneumatic park brake valve to take its second configuration when the first electronic control unit is operational..

The first aspect of the disclosure may seek to provide an efficient and reactive solution for the parking brake system, which includes the backup pneumatic park brake valve. A technical benefit may include that the backup pneumatic park brake valve may be piloted by the third solenoid valve controlled by the second ECU in case the first ECU of the EPB is defective. This provides a quick and effective park brake actuation even if the first ECU is defective On the other hand, the fourth solenoid valve allows isolating the bi-stable relay valve from the backup park brake valve if the third solenoid valve is actuated by the second ECU when the first ECU is operational.

Optionally in some examples, including in at least one preferred example, the electronically controlled pneumatic parking brake further comprises a pressure sensor for sensing an air pressure in the control line. A technical benefit may include that the pressure sensor allows knowing the air pressure in the control line of the bi-stable relay valve, thus the configuration taken by this relay valve.

Optionally in some examples, including in at least one preferred example, the electronically controlled pneumatic parking brake system further comprises a pressure sensor for sensing an air pressure in a pilot line of the backup pneumatic park brake valve.. A technical benefit may include the pressure sensor allows detecting when the third solenoid valve actually pilots the backup park brake valve.

Optionally in some examples, including in at least one preferred example, the third solenoid valve connects by default a pilot line of the backup pneumatic park brake valve to the atmosphere and wherein, when it is actuated, the third solenoid valve connects the source of air under pressure to the pilot line of the backup pneumatic park brake valve. A technical benefit may include an improved safety of the electronically controlled pneumatic parking brake system.

Optionally in some examples, including in at least one preferred example, the third solenoid valve connects by default the source of air under pressure to a pilot line of the backup pneumatic park brake valve and wherein, when it is actuated, the third solenoid valve connects the pilot line of the backup pneumatic park brake valve to the atmosphere. A technical benefit may include an improved safety of the electronically controlled pneumatic parking brake system.

Optionally in some examples, including in at least one preferred example, the electronically controlled pneumatic parking brake system further comprises a select low valve interposed on the pilot line, between the backup pneumatic park brake valve and the third solenoid valve. A technical benefit may include the fact that the select low valve makes the electronically controlled pneumatic parking brake system of the invention compatible with park brake actuation via pressure decrease in a air supply tank, thus with vehicles with and without onboard driver.

Optionally in some examples, including in at least one preferred example, by default, the fourth solenoid valve connects the control line to the backup pneumatic park brake valve and wherein, when it is actuated by the first ECU, the fourth solenoid valve isolates the control line from the backup pneumatic park brake valve. A technical benefit may include an increased efficiency of the third solenoid valve.

Optionally in some examples, including in at least one preferred example, the backup pneumatic park brake valve is closed by default when it is supplied with control air under pressure above a given threshold value and wherein, when it is actuated, the backup pneumatic park brake valve connects the fourth solenoid valve to the atmosphere. A technical benefit may include an increased efficiency for backup pneumatic park brake valve.

Optionally in some examples, including in at least one preferred example, the electronic park brake device is compatible with human-controlled venting of the source of air under pressure by actuation of a service brake. A technical benefit may include an increased versatility of the electronically controlled pneumatic parking brake system.

Optionally in some examples, including in at least one preferred example, the electronic park brake device includes at least two bi-stable relay valves, one backup pneumatic park brake valve for each bi-stable relay valve and a single third solenoid valve to control all backup pneumatic park brake valve. A technical benefit may include a better adaptation of the electronically controlled pneumatic parking brake system to a vehicle with a tractor and a trailer.

According to a second aspect of the disclosure, the invention relates to a vehicle comprising the electronically controlled pneumatic parking brake system as previously detailed.

The second aspect of the disclosure may seek to provide an optimized vehicle. A technical benefit may include that the vehicle is safer and more reliable, because of its parking brake system.

According to a third aspect of the disclosure, The invention relates to a method for electronically controlling a pneumatic parking brake system comprising
- at least one park brake actuator;
- a first electronic control unit;
- a second electronic control unit;
- an electronic park brake device controlled by the first electronic control unit and comprising
   - at least one bi-stable relay valve configured for selectively feeding the at least one park brake actuator with air under pressure;
   - a source of air under pressure for feeding air under pressure to each bi-stable relay valve, via a respective supply line;
   - at least one pair first and second solenoid valves piloted by the first electronic control unit for controlling the bi-stable relay valve via a control line;
   - at least one backup pneumatic park brake valve configured to take, depending on the pressure within the source of air under pressure, a first configuration where it isolates the control line from the outside and a second configuration where it purges the control line to the atmosphere;
- a third solenoid valve, external to the electronic park brake device, piloted by the second electronic control unit, fed by air from the source of air under pressure and configured to control the backup park brake valve for switching between its first and second configurations;
- a fourth solenoid valve, piloted by the first electronic control unit and which selectively connects the control line to the backup park brake valve;
the method comprising at least
a) piloting the fourth solenoid valve to isolate the control line from the backup park brake valve if the third solenoid valve is controlling the backup pneumatic park brake valve to take its second configuration when the first electronic control unit is operational.
piloting the fourth solenoid valve to connect the control line to the backup park brake valve when the first electronic control unit is not operational.

The third aspect of the disclosure may seek to provide an optimized method for controlling a park brake system. A technical benefit may include that the safety of the operation of the parking brake system is improved.

Optionally in some examples, including in at least one preferred example, the method further comprises
b) sensing a pressure within a pilot line of the backup pneumatic park brake valve to assess whether or not the third solenoid valve is controlling the backup pneumatic park brake valve to take its second configuration.

A technical benefit may include an improved safety in the operation of the park brake system.

Optionally in some examples, including in at least one preferred example, actuation of the third solenoid valve to switch the backup park brake valve between its first and second configurations occurs automatically. A technical benefit may include avoiding dependence of the method on a human operator.

Optionally in some examples, including in at least one preferred example, actuation of the third solenoid valve to switch the backup park brake valve between its first and second configurations is triggered by a driver. A technical benefit may include that the driver can initiate and control the method of the invention.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary fluid scheme of an electronically controlled pneumatic parking brake system according to a first example;
**FIG. 2** is an exemplary fluid scheme of an electronically controlled pneumatic parking brake system according to a second example;
**FIG. 3** is an exemplary fluid scheme of an electronically controlled pneumatic parking brake system according to a third example;
**FIG. 4** is an exemplary fluid scheme of an electronically controlled pneumatic parking brake system according to a fourth example;
**FIG. 5** is an exemplary fluid scheme of an electronically controlled pneumatic parking brake system according to a fifth example;
**FIG. 6** is an exemplary fluid scheme of an electronically controlled pneumatic parking brake system according to a sixth example; and
**FIG. 7** is an exemplary fluid scheme of an electronically controlled pneumatic parking brake system according to a seventh example;

### DETAILED DESCRIPTION

The detailed description set forth below provides information and examples of the disclosed technology with sufficient detail to enable those skilled in the art to practice the disclosure.

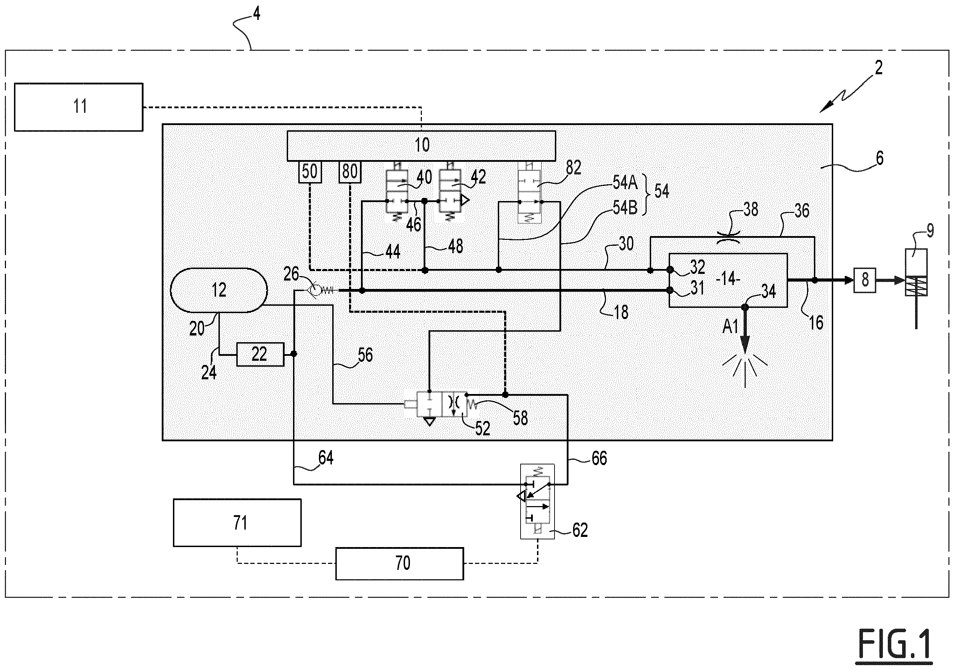

Figure 1 shows an electronic controlled park brake system 2 mounted onboard a vehicle 4 represented by its outside envelope in axle lines.

In the example of figure 1, the vehicle 4 is a rigid vehicle with several non-represented wheels, each wheel being controlled by a service brake actuator and a parking brake actuator. In some instances, these actuators may be combined in a combo actuator.

Assuming the vehicle 4 is a truck, it can be considered as a tractor, since it is provided with its own motorization system, which differs from a trailer.

The electronically controlled park brake system 2 includes an electronic park brake device 6, also called EPB, configured to selectively deliver air under pressure to at least one park brake relay 8 which feeds at least one park brake actuator 9.

The electronic park brake device 6 includes a first electronic control unit or ECU 10, a primary power supply 11 for supplying the ECU with electricity, a reservoir 12 of air under pressure and a bi-stable park brake relay valve 14 connected to the park brake relay 8 by a downstream connection line 16.

The reservoir 12 is a source of air under pressure for the electronically controlled park brake system 2.

The first ECU 10 controls the electronic park brake device 6.

Air pressure in the reservoir 12 is set to a predetermined value, for instance 8.5 bars.

The bi-stable park brake relay valve 14 is a pneumatic valve and it is supplied, at an entry port 31, with air under pressure from the reservoir 12 via an air supply line 18. An output 20 of the reservoir 12 is connected to an overflow valve 22 by a connection line 24. An output of the overflow valve 22 is connected to the air supply line 18. A check valve 26 is mounted on the air supply line 18, between the overflow valve and the bi-stable park brake relay valve 14.

Thus, air under pressure coming out of the reservoir 12 is supplied to the bi-stable park brake relay valve 14 through the connection line 24, the overflow valve 22, the check valve 26 and the air supply line 18.

A control line 30 is connected to a control port 32 of the bi-stable park brake relay valve 14. Depending on the pressure within the control line 30, the bi-stable park brake relay valve 14 can take two configurations.

When the air pressure within the control line 30 is above a first threshold value, say 1.5 bars, the bi-stable park brake relay valve 14 takes a first configuration where it provides the park brake relay 8 with air under pressure.

In this first configuration, air goes through the bi-stable park brake relay valve 14 and feeds the park brake actuator 9 through the downstream connection line 16 and the park brake relay 8, which releases the park brake of the vehicle 4. The air pressure within the downstream connection line 16 is proportional to the air pressure in the control line 30 and in the supply line 18.

When the air pressure in the control line 30 is below a second threshold value, which can be equal to or lower than the first threshold value, say 0 bars, the bi-stable park brake relay valve 14 takes a second configuration, where it isolates the downstream connecting line 16 and the park brake actuator 9 from the air supply line 18 and connects the downstream connecting line 16 and the park brake actuator 9 to the atmosphere via a vent orifice 34, as shown by arrow A1 on figure 1. This results in applying the park brake of the vehicle 4.

A connection line 36, equipped with a throttle 38, connects the control line 30 near the input port 32, to the downstream connection line 16.

A pair of two solenoid valves 40 and 42 are used for controlling the air pressure within the control line 30, by deriving a portion of the air circulating in the air supply line 18 towards the control line 30. Both solenoid valves 40 and 42 belong to the electronic park brake device 6. They are controlled by the ECU 10.

A first connection line 44 connects the air supply line 18 to an input of the first solenoid valve 40. A second connection line 46 connects an output of the first solenoid valve 40 to an input of the second solenoid valve 42. A third connection line 48 connects the second connection line 46 to the control line 30. By default, the first solenoid valve 40 blocks the communication between the first and second connection lines 44 and 46. When it is actuated, the first solenoid 40 valve connects the connection lines 44 and 46. By default, the second solenoid valve isolates the second connection line 46 from the atmosphere. When it is actuated, the second solenoid valve 42 connects the second connection line 46, the third connection line 48 and the control line 30 to the atmosphere. In particular, when it is actuated, the second solenoid valve 42 purges the control line 30.

The first solenoid valve is a magnet valve and controls the input of air in the control line 30. It can be named MVTCI for "Magnet Valve Tractor Control Input". The second solenoid valve 42 is a magnetic valve and controls the output of air from the control line 30. It can be named MVTCO for "Magnet Valve Tractor Control Output".

Depending on the respective opening and closing times of the solenoid valves 40 and 42, the air pressure within the control line 30 can be set at any value between zero and the value of the air pressure within the reservoir 12. Thus, the two solenoid valves 40 and 42 together control the bi-stable park brake relay valve 14 via the control line 30.

The electronic park brake device 6 also includes a pressure sensor 50 for sensing the air pressure within the control line 30.

In case of pressure drop within the reservoir 12, for instance in case of a leak in this reservoir or in one of components 22, 24 and 26, the air pressure within the air supply line 18 should be stable, thanks to the check valve 26. However, if the air pressure in the reservoir 12 decreases below a certain threshold, the electronically controlled park brake system 2 must switch to a safety mode where the bi-stable park brake relay valve 14 is controlled, so that the control line 30 is connected to the atmosphere and no air under pressure is provided to the park brake relay 8 and to the park brake actuator 9. If no air is supplied to the park brake actuator 9, the park brake is applied.

A backup park brake valve 52 belongs to the electronic park brake device 6. An entry port of the backup park brake valve 52 is connected to the control line 30, via a connection line 54, and an output port of the backup park brake valve 52 is connected to the atmosphere. The backup park brake valve 52 is a pneumatic valve and it is controlled by a control line 56, which is supplied with air under pressure directly from the reservoir 12, without going through the overflow valve 22. When air is present in the control line 56 at a pressure above a given threshold value, say 2.5 bars, the backup park brake valve 52 is in a first configuration where it isolates the connection line 54 from the outside. In other words, the backup pneumatic park brake valve 52 is closed by default when it is supplied, via the control line 56, with control air at a pressure above the given threshold value

A spring 58 is mounted on the backup park brake valve 52 and brings it by default into a second configuration The spring 58 is selected so that, as long as the air pressure within the control line 56 remains above a given threshold value, say 2.5 bars, the backup park brake valve 52 remains in its first configuration. In other words, if there is enough air pressure in the control line 56, this pressure is the control line 56 counteracts the spring 58 so that the backup park brake valve 52 remains in its first configuration, isolating the control line 30 from the atmosphere.

When the air pressure within the control line 56 drops below this given threshold value, this pressure is not sufficient to counteract the action of the spring 58 which brings the backup park brake valve 52 into its second configuration, where it connects the connection line 54 to the atmosphere. This allows purging the connection line 54 and the control line 30. Because of the control line 30 being purged, the bi-stable park brake relay valve 14 switches to its second configuration where it isolates the downstream connecting line 16 and the park brake actuator 9 from the air supply line 18 and connects the downstream connecting line 16 and the park brake actuator 9 to the atmosphere, without providing air to the park brake relay 8 and to the park brake actuator 9. The park brake is applied thus by the park brake actuator 9.

In case of failure of the ECU 10 or of the primary power supply 11 it is no more possible to control the two solenoid valves 40 and 42. Thus, it is no more possible to modify the air pressure within the control line 30 and it is no more possible to change the configuration of the bi-stable park brake relay valve 14, which remains in its configuration set when the ECU 10 and the primary power supply 11 were operational.

If the bi-stable park brake relay valve 14 was previously in its first configuration, this means that it goes on supplying the park brake relay 8 and the park brake actuator 9 with air under pressure coming from the reservoir 12. The park brake is not applied and the vehicle cannot be immobilized.

For a vehicle 4 with an onboard driver, this can be handle by decreasing the air pressure within the reservoir 12, by repeated actuations of the service brake. Those actuations can be performed by the driver who depresses the service brake pedal.

For a vehicle 4 without a driver and for a remotely driven vehicle, a pressure drop in the reservoir 12 can be obtained by electronic actuation of the service brake. This actuation is obtained via a peripheral system, independent from the main parking brake system 2. Such an independent system must be supplied with electricity independently.

These solutions rely on the fact that pressure drop within the reservoir 12 will result in pressure drop within the control line 56, to a point where the backup park brake valve 52 will switch to its configuration where it connects the connection line 54 to the atmosphere, under the action of the spring 58.

One drawback of such solutions is the time needed to decrease the pressure within the reservoir 12 by actuation of the service brake, either manually or by electronic actuation. The volume of the reservoir 12 is relatively big and some time is required to decrease the pressure within such a volume to a value low enough to actuate the backup park brake valve 52. One must also take into consideration that the service brake components used with these solutions, in order to decrease the air pressure within the reservoir 12, have not been developed for such a safety application and might not be correctly designed for this. In particular, a risk of breakage of one of these components cannot be excluded.

In order to address this issue, the electronically controlled park brake system 2 includes a third solenoid valve 62, which is external to the electronic park device 6. In other words, the third electronic valve 62 does not belong to the electronic park brake device 6.

This third solenoid valve 62 is controlled by a second ECU 70 supplied with electricity by a secondary power supply 71. Preferably, the second ECU 70 and the secondary power supply 71 are respectively distinct from the first ECU 10 and the first primary power supply 11. The risk that both ECU and/or both primary supplies are defective at the same time is low.

Advantageously, an input port of the third solenoid valve 62 is supplied with air under pressure from the reservoir 12 via a connection line 64. Advantageously, the connection line 64 is connected to the output of the overflow valve 22.

An output of the third solenoid valve 62 is connected, by another connection line 66, to the backup park brake valve 52, on the same side as the spring 58. Thus, the air pressure within the other connection line 66 adds up with the mechanical effort exerted by the spring 58 and counteracts the action of the air pressure within the control line 56.

When it is controlled with air at the pressure of the reservoir 12 at its nominal value, the third solenoid valve 62 isolates the connection line 64 from the environment and purges the other connection line 66 to the atmosphere.

When it is actuated by the second ECU 70, the third solenoid valve 62 connects the two connection lines 64 and 66, so that air under pressure of the reservoir 12 is applied to the backup park brake valve 62 on the same side as the spring 58, which balances the action of the air pressure within the control line 56. Then, the action of the spring 58 becomes essential, as compared to the action of air pressure. The spring 58 switches the backup park brake valve 52 into its second configuration, where it purges the connection line 54 to the atmosphere.

In other words, the third solenoid valve 62 allows forcing the backup park brake valve 52 to its second position, even when the air pressure within the reservoir tank has not reached a low value. This allows quickly decreasing the air pressure in the control line 30 of the bi-stable park brake relay valve 14, which switches to its second configuration where it it isolates the downstream connecting line 16 and the park brake actuator 9 from the air supply line 18 and connects the downstream connecting line 16 and the park brake actuator 9 to the atmosphere.

This approach provides a particularly efficient safety function when the first ECU or the first primary power supply 11 is defective.

The overall operation of the electronically controlled pneumatic park brake system 2 is also improved in order to react to a case where the safety function is triggered by an actuation of the third solenoid valve 62, whereas the first electronic control unit 10 is operational, that is whereas both the ECU 10 and the primary power supply work properly. Such a situation could occur in case of a default in the second ECU 70, in the secondary supply 71 or in the third solenoid valve 62 or by erroneous actuation of the third solenoid valve 62 by the driver.

The electronic park brake device 6 includes a second pressure sensor 80 connected to the first ECU 10 and capable of determining the air pressure within the other connection line 66. This second pressure sensor 80 allows indirectly knowing the position of the third solenoid valve 62. Indeed, if the relative air pressure within the other connection line 66 is above a given threshold value, say 0.5 bars, one can consider that the third solenoid valve 62 has been actuated by the second ECU 70.

This actuation of the third solenoid valve 62 is inappropriate if the first ECU 10 is still operational since this actuation could result into purging the control line 30, whereas the first and second solenoid valves 40 and 42 can still be piloted by the first ECU 10 to adjust the air pressure within the control line 30.

In order to address this issue, the electronic park brake device 6 includes a fourth solenoid valve 82 piloted by the first ECU 10 and which is interposed between an upstream portion 54A and a downstream portion 54B of the connection line 54.

By default, in its non-actuated position, the fourth solenoid valve connects the two portions 54A and 54B of the connection line 54, which allows the backup park brake valve 52 to fulfill its safety mechanical function, when it is controlled by the third solenoid valve 62. In its actuated position, the fourth solenoid valve 82 isolates the two portions 54A and 54B of the connection line 54 from each other. Thus, the fourth solenoid valve is capable of selectively connecting the control line 30 to the backup park brake valve 52, depending on a control order received from the first ECU 10.

Consider the case where the first ECU 10 is operational and the third solenoid valve 62 is actuated by the second ECU 70. In such a case, a pressure increase within the other connection line 66 is detected by the second pressure sensor 80. The output of the second pressure sensor 80 is treated by the first ECU 10 as a case of inappropriate actuation of the third solenoid valve 62. This is possible since the first ECU is operational. The first ECU 10 then actuates the fourth solenoid valve 82 in order to isolate the control line 30 from the backup park brake valve 52, by separating the portions 54A and 54B of the connection line 54, so that the control line 30 is not purged to the atmosphere, even if the backup park brake valve 52 has been switched to its second configuration by action of the third solenoid valve 62. Then, the first ECU 10 pilots the first and second solenoid valves 40 and 42 to adjust the air pressure within the control line 30 to the desired value, which can be controlled by the first pressure sensor 50.

In other words, the first electronic control unit 10 is configured to pilot the fourth solenoid valve 82 to isolate the control line 30 from the backup park brake valve 52 if the third solenoid valve 62 is controlling the backup pneumatic park brake valve 52 to take its second configuration when the first electronic control unit 10 is operational

Thus, the combination of the third and fourth solenoid valves 62 and 82 allows a safer operation of the electronic controlled park brake system 2 which is capable of reacting:
- to an unwanted pressure drop within the reservoir 12, via the backup park brake valve 52;
- to a failure of the first ECU 10 or first primary supply 11, via the third solenoid valve 62;
- to an inappropriate actuation of the third solenoid valve 62, via the fourth solenoid valve 82, with proper actuation of the first and second solenoid valves 40 and 42.

In particular, the fourth solenoid valve 82 prevents any unintended park brake actuation due to an unwanted activation of the third external solenoid valve 62 in a normal situation, where the first ECU 10 is operational.

Since the third solenoid valve 62, the second ECU 70 and the secondary power supply 71 are located outside the electronic park brake device 6, this electronic park brake device can be used in a vehicle which does not need a third solenoid valve, in particular a vehicle intended to have a driver on board, the driver being capable of reacting to a default situation of the electronic control park brake system 2, as explained here above. In other words, the electronic park brake device 6 is compatible with human-controlled purging of the reservoir 12, by actuation of a service brake, for decreasing the air pressure in the control line 56 in order to switch the backup park brake valve 52 in its second configuration, where the backup park brake valve 52 connects the control line 30 to the atmosphere.

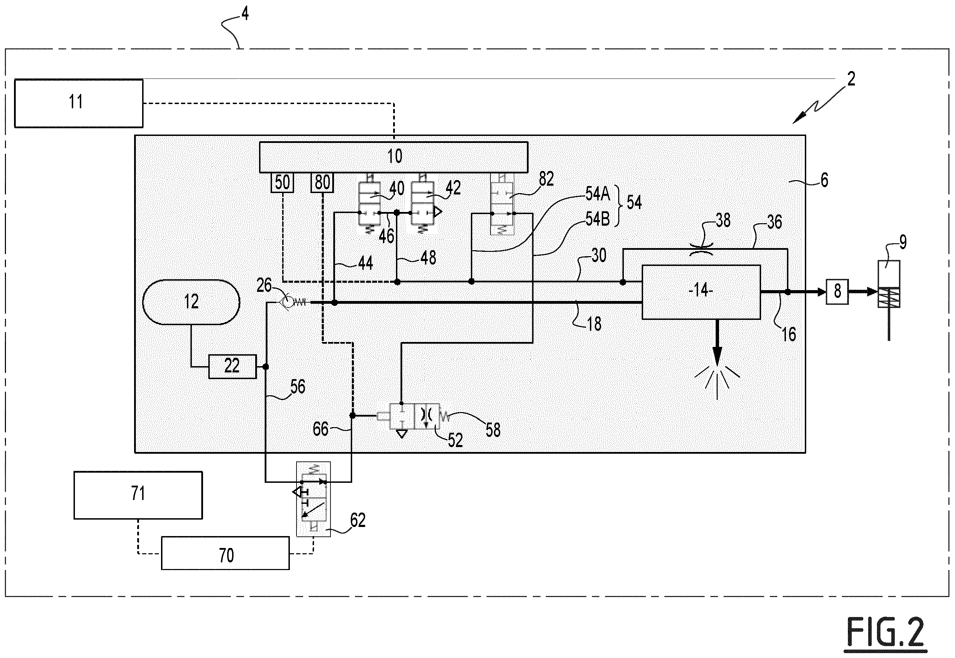

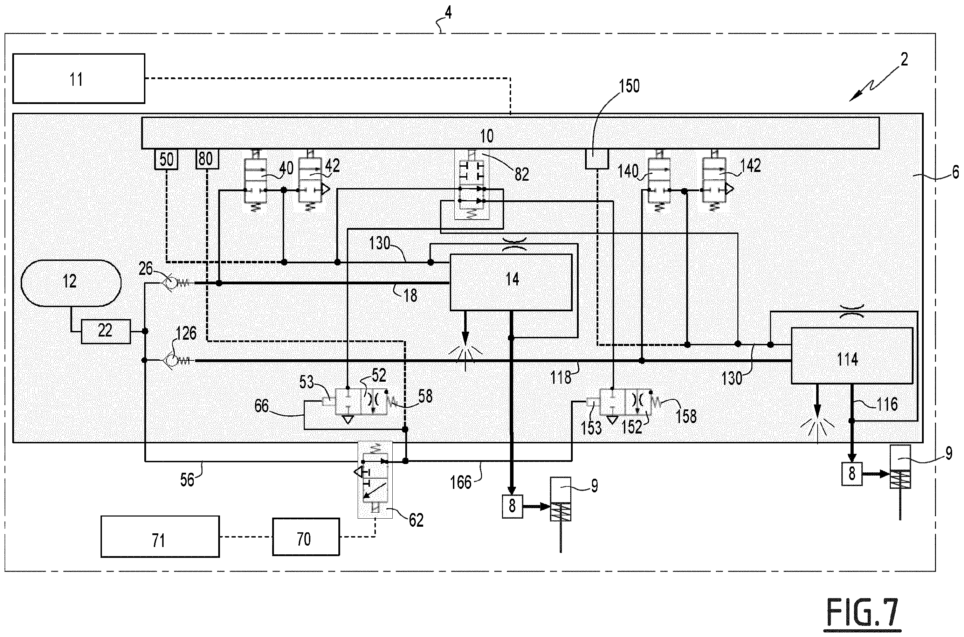

In the second to seventh embodiments of the invention represented on figures 2 to 7, the components of the electronically controlled park brake system 2 similar to the ones of the first embodiment bear the same references and are not described in detail. In the description of these second to seventh embodiments, if a reference is used in the description without being shown on the corresponding figure or shown on a figure without being mentioned in the corresponding description, it corresponds to the component having the same reference in the first embodiment or in a previously mentioned embodiment.

Hereafter, maily the differences between the second to seventh embodiments and the first embodiments are listed.

In the second embodiment of figure 2, the third solenoid valve 62 is interposed between the overflow valve 22 and a single control port 53 of the backup park brake valve 52. By default, the third solenoid valve 62 connects the two connection lines 56 and 66, so that the backup park brake valve 52 is controlled with the pressure prevailing at the output of the overflow valve 22.

When it is actuated, the third solenoid valve 62 connects the other connection line 66 to the atmosphere, so that no air pressure is applied on the single control port 53 and so that the spring 58 switches the backup park brake valve 52 to its second configuration, where it connects the connection line 54 to the atmosphere.

In this embodiment, actuation of the third solenoid valve 62 is detected by the second pressure sensor 80 as corresponding to a pressure decrease, which is interpreted by the first ECU 10 to actuate the fourth solenoid valve 82, if this first ECU 10 is operational.

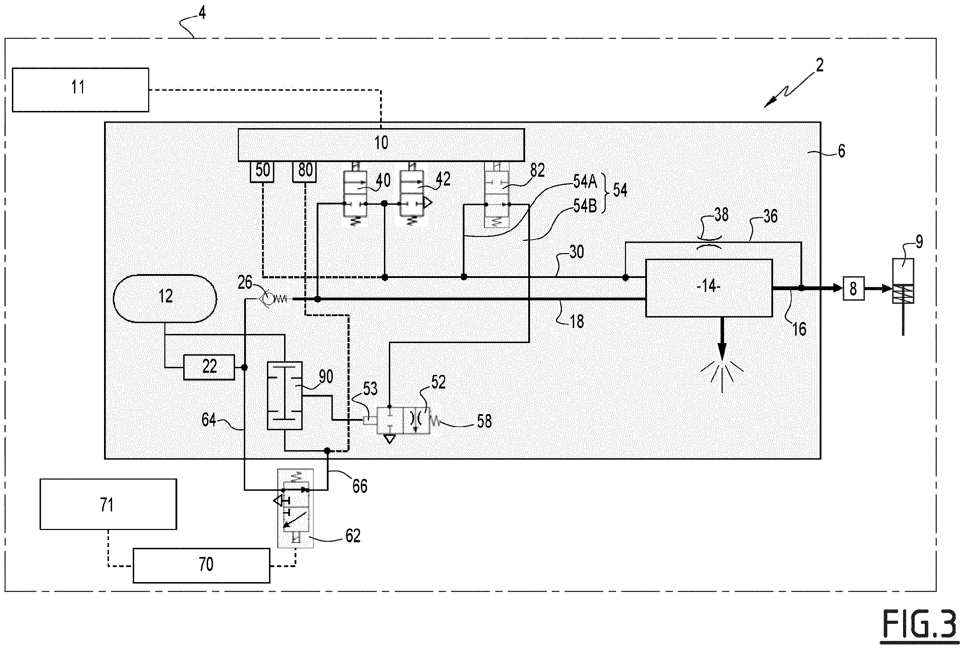

In the third embodiment represented on figure 3, a select low valve 90 is connected to the single control port 53 of the backup park brake valve 52. This select low valve 90 is supplied, on one side, with air coming directly from the reservoir 12 and, on the other side, with air coming from the third solenoid valve 62. Thus, the single control port 53 is fed with air at the lowest pressure amongst the pressure in the reservoir 12 and the pressure delivered by the third solenoid valve 62.

This embodiment is compatible with park brake actuation via pressure decrease in reservoir 12, via service brake pedal actuation by driver, when a driver is present on board the vehicle, or by electronic actuation of the service brake.

The pressure sensor 80 detects the air pressure in the connection line 66, between the third solenoid valve 62 and the single control port 53. A sharp decrease of this pressure can be interpreted by the ECU as an actuation of the third solenoid valve.

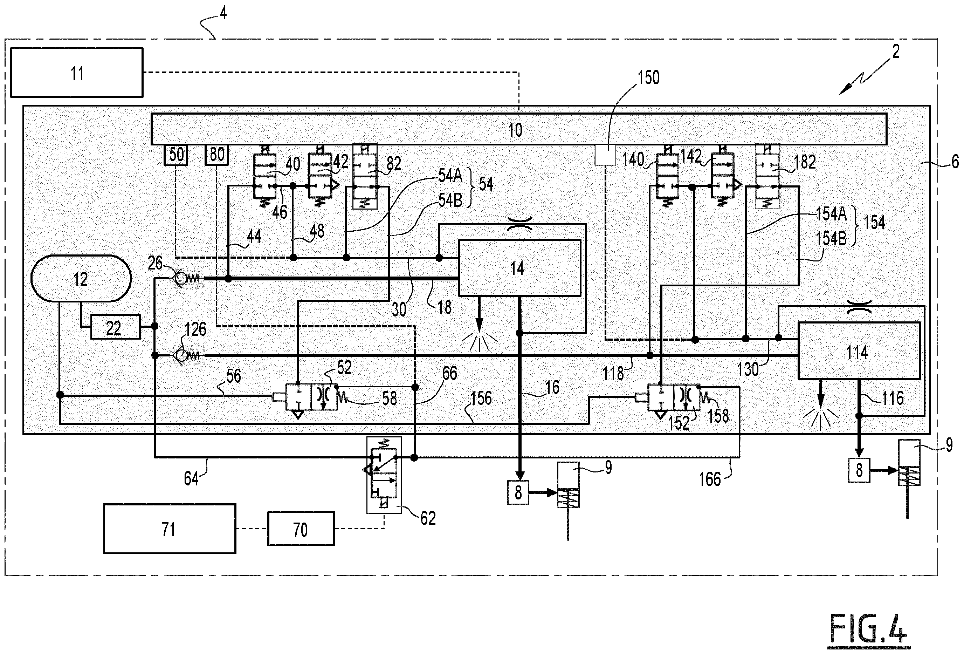

In the fourth embodiment of figure 4, the vehicle 4 includes a tractor, with a first bi-stable park brake relay valve 14, and a trailer, with a second bi-stable park brake relay valve 114. Downstream connection lines 16 and 116 respectively connect the bi-stable park brake relay valves to park brake relays 8 and park brake actuators 9 of the tractor and of the trailer.

A first backup park brake valve 52 is used for the tractor and a second backup park brake valve 152 is used for the trailer. Each backup park brake valve 52 or 152 is controlled by air coming from the reservoir 12, via a respective parallel control lines 56 and 156. A return spring 58, respectively 158, biases each backup park brake valve 52 or 152 into its second configuration defined as in the first embodiment.

A single first ECU 10, a second first primary power supply 11, a second ECU 70 and a secondary power supply 71 are used in this embodiment.

A single third solenoid valve 62, also external to the electronic park brake device 6, is connected in parallel to the two backup park brake valves 52 and 152. The third solenoid valve 62 controls the two backup park brake valves 52 and 152, via respective connection lines 66 and 166, with the same approach as in the first embodiment.

First and second air supply lines 18 and 118, respectively equipped with first and second check valves 26 and 126, feed the first and second bi-stable park brake relay valves 14 and 114, in parallel, from the output of the overflow valve 22.

First and second control lines 30 and 130 allow respectively controlling the first and second bi-stable park brake relay valves 14 and 114.

Two first pressure sensors 50 and 150 are respectively connected to the first and second control lines 30 and 130 and a single pressure sensor 80 is connected to a connection line 66 which extends between the third solenoid valve 62 and the first backup park brake valve 52.

Alternatively, this second pressure sensor 80 may be connected to a second connection line 166, which extends between the third solenoid valve 62 and the second bi-stable park brake relay valve 114.

Two pairs of solenoid valves 40 and 42, 140 and 142, are used for controlling the air pressure within the first and second control lines 30 and 130, respectively.

A fourth solenoid valve 82 is used to selectively connect the control line 30 to the first backup park brake valve 52, via an upstream portion 54A and a downstream portion 54B of a connection line 54.

Another fourth solenoid valve 182 is used to selectively connect the second control line 130 to the second backup park brake valve 152, via an upstream portion 154A and a downstream portion 154B of a connection line 154.

In a non-represented variant of the invention, the vehicle has two trailers or more. Then, a single bi-stable park brake relay valve 114 can be used and connected to several park brake relays 8. In such a case, a single third solenoid valve can still be used.

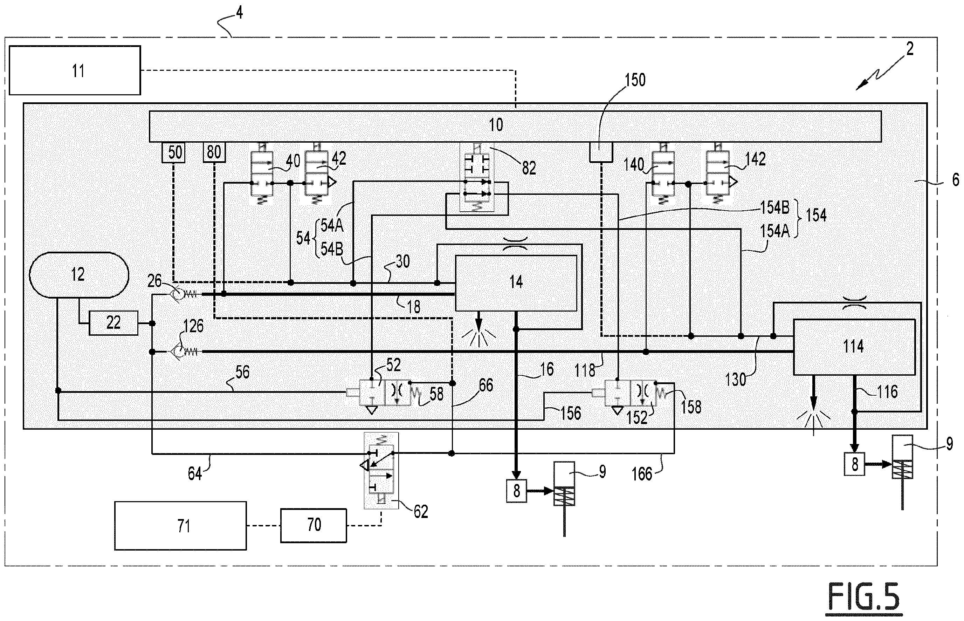

The fifth embodiment represented on figure 5 differs from the fourth embodiment by the fact that a single fourth solenoid valve 82 is used to selectively connect the control lines 30 and 130 to the backup park brake valves 52 and 152, in parallel, via upstream and downstream portions 54A, 54B and 154A, 154B of two connection lines 54 and 154.

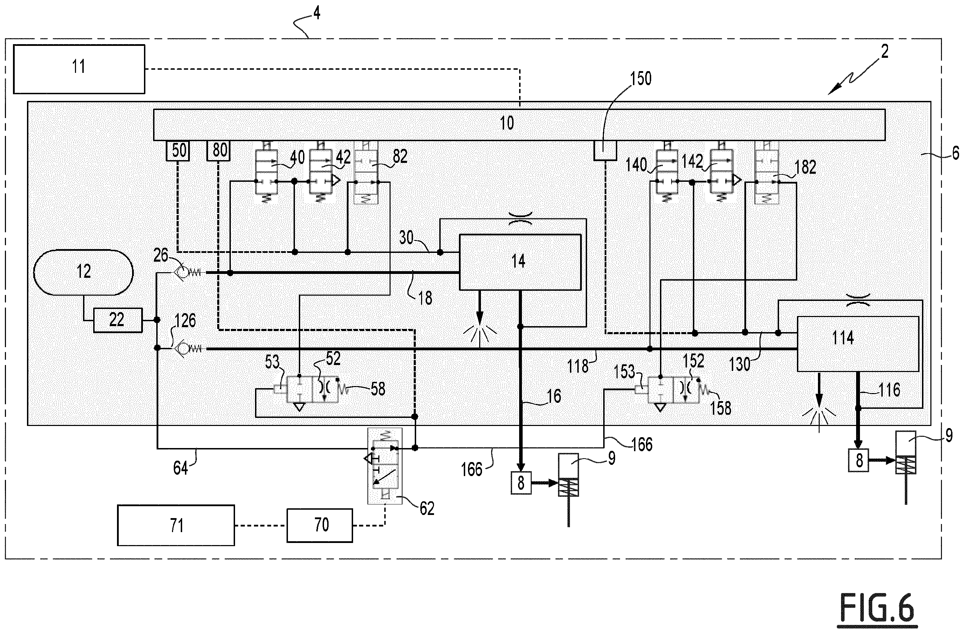

In the sixth embodiment represented on figure 6, the approaches of the second and fourth embodiments are combined. In other words, in an electronic controlled park brake system 2 for a vehicle 4 with a trailer, the single third solenoid valve 62 is connected between the overflow valve 22 and a single control port 53 or 153 of each backup park brake valve 52 or 152.

Two fourth solenoid valves 82 and 182 are used, as in the fourth embodiment.

The seventh embodiment is a combination of the fifth and sixth embodiments where a single fourth solenoid valve 82 is used to selectively connect the two control lines 30 and 130 to the two backup park brake valves 52 and 152, in parallel.

In all embodiments, the park brake relay(s) is(are) optional. In other words, each park brake actuator can be fed directly by a bi-stable park brake relay valve 14 or 114.

In all embodiments, actuation of the third solenoid valve 62 to switch the backup park brake valve(s) 52 and possibly 152 between its(their) first and second configurations preferably occurs automatically, when conditions (such as vehicle speed, road condition, etc.) are detected to be the best to immobilize the vehicle and when the second ECU 70 becomes aware that the first ECU is defective. Monitoring of the first ECU 10 by the second ECU 70 can be performed in any known manner.

Alternatively, in all embodiments, when a driver is in charge of the vehicle, either onboard or remotely, he/she can trigger the second ECU 70 to actuate the third solenoid valve 62.

**Example 1:** An electronically controlled pneumatic parking brake system 2 for a vehicle 4, wherein said system comprises
- at least one park brake actuator 9;
- a first electronic control unit 10;
- a second electronic control unit 11;
- an electronic park brake device 6 controlled by the first electronic control unit and comprising
   - at least one bi-stable relay valve 14; 114 configured for selectively feeding the at least one park brake actuator 9 with air under pressure;
   - a source of air under pressure 12 for feeding air under pressure to each bi-stable relay valve, via a respective supply line 18; 118;
   - at least one pair of first and second solenoid valves 40, 42; 140, 142 piloted by the first electronic control unit 10 for controlling the bi-stable relay valve via a control line 30; 130;
   - at least one backup pneumatic park brake valve 52; 152 configured to take, depending on the pressure within the source of air under pressure 12, a first configuration where it isolates the control line from the outside and a second configuration where it purges the control line to the atmosphere;
- a third solenoid valve 62; 162, external to the electronic park brake device 6, piloted by the second electronic control unit 70, fed by air from the source of air under pressure 12 and configured to control the backup pneumatic park brake valve 52; 152 for switching between its first and second configurations;
- a fourth solenoid valve 82; 182, piloted by the first electronic control unit 10 and which selectively connects the control line 30; 130 to the backup park brake valve 52; 152;
wherein the first electronic control unit 10 is configured to pilot the fourth solenoid valve 82; 182 to isolate the control line 30; 130 from the backup park brake valve 52; 152 if the third solenoid valve 62; 162 is controlling the backup pneumatic park brake valve to take its second configuration when the first electronic control unit is operational.

**Example 2:** The electronically controlled pneumatic parking brake system of example 1, further comprising a pressure sensor 50; 150 for sensing an air pressure in the control line 30; 130.

**Example 3:** The electronically controlled pneumatic parking brake system of one of examples 1 or 2, further comprising a pressure sensor 80 for sensing an air pressure in a pilot line 66; 166 of the backup pneumatic park brake valve 52; 152.

**Example 4:** The electronically controlled pneumatic parking brake system of example 3, wherein the pilot line 66 is a line where air pressure increases when the backup pneumatic park brake valve 52; 152 is actuated.

**Example 5:** The electronically controlled pneumatic parking brake system of example 3, wherein the pilot line 66 is a line where air pressure decreases when the backup pneumatic park brake valve 52; 152 is actuated.

**Example 6:** The electronically controlled pneumatic parking brake system of one of examples 1 to 5, wherein the third solenoid valve 62; 162 connects by default a pilot line 66; 166 of the backup pneumatic park brake valve 52; 152 to the atmosphere and wherein, when it is actuated, the third solenoid valve connects the source of air under pressure 12 to the pilot line of the backup pneumatic park brake valve.

**Example 7:** The electronically controlled pneumatic parking brake system of one of examples 1 to 5, wherein the third solenoid valve 62; 162 connects by default the source of air under pressure 12 to a pilot line 66; 166 of the backup pneumatic park brake valve 52; 152 and wherein, when it is actuated, the third solenoid valve connects the pilot line of the backup pneumatic park brake valve to the atmosphere.

**Example 8:** The electronically controlled pneumatic parking brake system of example 7, further comprising a select low valve 90 interposed on the pilot line 66, between the backup pneumatic park brake valve 52 and the third solenoid valve 62.

**Example 9:** The electronically controlled pneumatic parking brake system of one of examples 1 to 8, wherein, by default, the fourth solenoid valve 82; 182 connects the control line 30; 130 to the backup pneumatic park brake valve 52; 152 and wherein, when it is actuated by the first ECU 10, the fourth solenoid valve isolates the control line from the backup pneumatic park brake valve.

**Example 10:** The electronically controlled pneumatic parking brake system of one of examples 1 to 9, wherein the backup pneumatic park brake valve 52; 152 is closed by default when it is supplied with control air under pressure above a given threshold value and wherein, when it is actuated, the backup pneumatic park brake valve connects the fourth solenoid valve 82; 182 to the atmosphere.

**Example 11:** The electronically controlled pneumatic parking brake system of one of examples 1 to 10, further comprising an overflow valve 22 between the source of air under pressure 12 and the third solenoid valve 62; 162.

**Example 12:** The electronically controlled pneumatic parking brake system of example 11, further comprising a check valve 26; 126 between the overflow valve 22 and each supply line 18; 118.

**Example 13:** The electronically controlled pneumatic parking brake system of one of examples 1 to 12, wherein the electronic park brake device 6 is compatible with human-controlled venting of the source of air under pressure 12 by actuation of a service brake.

**Example 14:** The electronically controlled pneumatic parking brake system of one of examples 1 to 13, wherein the electronic park brake device 6 includes at least two bi-stable relay valves 14, 114, one backup pneumatic park brake valve 52; 152 for each bi-stable relay valve and a single third solenoid valve 62 to control all backup pneumatic park brake valve 52; 152.

**Example 15:** The electronically controlled pneumatic parking brake system of one of examples 1 to 13, wherein the single third solenoid valve 62 is connected to all backup pneumatic park brake valves 52; 152 in parallel.

**Example 16:** A vehicle 4 comprising the electronically controlled pneumatic parking brake system 2 according to one of examples 1 to 15.

**Example 17:** A method for electronically controlling a pneumatic parking brake system 2 comprising
- at least one park brake actuator 9;
- a first electronic control unit 10;
- a second electronic control unit 70;
- an electronic park brake device 6 controlled by the first electronic control unit and comprising
   - at least one bi-stable relay valve 14; 114 configured for selectively feeding the at least one park brake actuator with air under pressure;
   - a source of air under pressure 12 for feeding air under pressure to each bi-stable relay valve, via a respective supply line 18; 118;
   - at least one pair first and second solenoid valves 40, 42; 140, 142 piloted by the first electronic control unit 10 for controlling the bi-stable relay valve via a control line 30; 130;
   - at least one backup pneumatic park brake valve 52; 152 configured to take, depending on the pressure within the source of air under pressure 12, a first configuration where it isolates the control line from the outside and a second configuration where it purges the control line to the atmosphere;
- a third solenoid valve 62, external to the electronic park brake device 6, piloted by the second electronic control unit 70, fed by air from the source of air under pressure 12 and configured to control the backup park brake valve 52; 152 for switching between its first and second configurations;
- a fourth solenoid valve 82; 182, piloted by the first electronic control unit 10 and which selectively connects the control line 30; 130 to the backup park brake valve 52; 152;
the method comprising at least
a) piloting the fourth solenoid valve 82; 182 to isolate the control line 30; 130 from the backup park brake valve 52; 152 if the third solenoid valve 62 is controlling the backup pneumatic park brake valve to take its second configuration when the first electronic control unit 10 is operational.
b) piloting the fourth solenoid valve 82; 182 to connect the control line 30; 130 to the backup park brake valve 52; 152 when the first electronic control unit is not operational.

**Example 18:** The method of example 17, further comprising:
c) sensing a pressure within a pilot line 66; 166 of the backup pneumatic park brake valve 52; 152 to assess whether or not the third solenoid valve 62 is controlling the backup pneumatic park brake valve to take its second configuration.

**Example 19:** The method of one of examples 17 and 18, wherein actuation of the third solenoid valve 62 to switch the backup park brake valve between its first and second configurations occurs automatically.

**Example 20:** The method of one of examples 17 and 18, wherein actuation of the third solenoid valve 62 to switch the backup park brake valve between its first and second configurations is triggered by a driver.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An electronically controlled pneumatic parking brake system (2) for a vehicle (4), wherein said system comprises
- at least one park brake actuator (9);
- a first electronic control unit (10);
- a second electronic control unit (11);
- an electronic park brake device (6) controlled by the first electronic control unit and comprising
• at least one bi-stable relay valve (14; 114) configured for selectively feeding the at least one park brake actuator (9) with air under pressure;
• a source of air under pressure (12) for feeding air under pressure to each bi-stable relay valve, via a respective supply line (18; 118);
• at least one pair of first and second solenoid valves (40, 42; 140, 142) piloted by the first electronic control unit (10) for controlling the bi-stable relay valve via a control line (30; 130);
• at least one backup pneumatic park brake valve (52; 152) configured to take, depending on the pressure within the source of air under pressure (12), a first configuration where it isolates the control line from the outside and a second configuration where it purges the control line to the atmosphere;
- a third solenoid valve (62; 162), external to the electronic park brake device (6), piloted by the second electronic control unit (70), fed by air from the source of air under pressure (12) and configured to control the backup pneumatic park brake valve (52; 152) for switching between its first and second configurations;
- a fourth solenoid valve (82; 182), piloted by the first electronic control unit (10) and which selectively connects the control line (30; 130) to the backup park brake valve (52; 152);
wherein the first electronic control unit (10) is configured to pilot the fourth solenoid valve (82; 182) to isolate the control line (30; 130) from the backup park brake valve (52; 152) if the third solenoid valve (62; 162) is controlling the backup pneumatic park brake valve to take its second configuration when the first electronic control unit is operational.

2. The electronically controlled pneumatic parking brake system of claim 1, further comprising a pressure sensor (50; 150) for sensing an air pressure in the control line (30; 130).

3. The electronically controlled pneumatic parking brake system of any of claims 1-2, further comprising a pressure sensor (80) for sensing an air pressure in a pilot line (66; 166) of the backup pneumatic park brake valve (52; 152).

4. The electronically controlled pneumatic parking brake system of any of claims 1-3, wherein the third solenoid valve (62; 162) connects by default a pilot line (66; 166) of the backup pneumatic park brake valve (52; 152) to the atmosphere and wherein, when it is actuated, the third solenoid valve connects the source of air under pressure (12) to the pilot line of the backup pneumatic park brake valve.

5. The electronically controlled pneumatic parking brake system of any of claims 1-3, wherein the third solenoid valve (62; 162) connects by default the source of air under pressure (12) to a pilot line (66; 166) of the backup pneumatic park brake valve (52; 152) and wherein, when it is actuated, the third solenoid valve connects the pilot line of the backup pneumatic park brake valve to the atmosphere.

6. The electronically controlled pneumatic parking brake system of claim 5, further comprising a select low valve (90) interposed on the pilot line (66), between the backup pneumatic park brake valve (52) and the third solenoid valve (62).

7. The electronically controlled pneumatic parking brake system of any of claims 1-6, wherein, by default, the fourth solenoid valve (82; 182) connects the control line (30; 130) to the backup pneumatic park brake valve (52; 152) and wherein, when it is actuated by the first ECU (10), the fourth solenoid valve isolates the control line from the backup pneumatic park brake valve.

8. The electronically controlled pneumatic parking brake system of any of claims 1-7, wherein the backup pneumatic park brake valve (52; 152) is closed by default when it is supplied with control air under pressure above a given threshold value and wherein, when it is actuated, the backup pneumatic park brake valve connects the fourth solenoid valve (82; 182) to the atmosphere.

9. The electronically controlled pneumatic parking brake system of any of claims 1-8, wherein the electronic park brake device (6) is compatible with human-controlled venting of the source of air under pressure (12) by actuation of a service brake.

10. The electronically controlled pneumatic parking brake system of any of claims 1-9, wherein the electronic park brake device (6) includes at least two bi-stable relay valves (14, 114), one backup pneumatic park brake valve (52; 152) for each bi-stable relay valve and a single third solenoid valve (62) to control all backup pneumatic park brake valve (52; 152).

11. A vehicle (4) comprising the electronically controlled pneumatic parking brake system (2) according to any of claims 1-10.

12. A method for electronically controlling a pneumatic parking brake system (2) comprising
- at least one park brake actuator (9);
- a first electronic control unit (10);
- a second electronic control unit (70);
- an electronic park brake device (6) controlled by the first electronic control unit and comprising
• at least one bi-stable relay valve (14; 114) configured for selectively feeding the at least one park brake actuator with air under pressure;
• a source of air under pressure (12) for feeding air under pressure to each bi-stable relay valve, via a respective supply line (18; 118);
• at least one pair first and second solenoid valves (40, 42; 140, 142) piloted by the first electronic control unit (10) for controlling the bi-stable relay valve via a control line (30; 130);
• at least one backup pneumatic park brake valve (52; 152) configured to take, depending on the pressure within the source of air under pressure (12), a first configuration where it isolates the control line from the outside and a second configuration where it purges the control line to the atmosphere;
- a third solenoid valve (62), external to the electronic park brake device (6), piloted by the second electronic control unit (70), fed by air from the source of air under pressure (12) and configured to control the backup park brake valve (52; 152) for switching between its first and second configurations;
- a fourth solenoid valve (82; 182), piloted by the first electronic control unit (10) and which selectively connects the control line (30; 130) to the backup park brake valve (52; 152);
the method comprising at least
a) piloting the fourth solenoid valve (82; 182) to isolate the control line (30; 130) from the backup park brake valve (52; 152) if the third solenoid valve (62) is controlling the backup pneumatic park brake valve to take its second configuration when the first electronic control unit (10) is operational.
b) piloting the fourth solenoid valve (82; 182) to connect the control line (30; 130) to the backup park brake valve (52; 152) when the first electronic control unit is not operational.

13. The method of claim 12, further comprising:
c) sensing a pressure within a pilot line (66; 166) of the backup pneumatic park brake valve (52; 152) to assess whether or not the third solenoid valve (62) is controlling the backup pneumatic park brake valve to take its second configuration.

14. The method of any of claims 12 and 13, wherein actuation of the third solenoid valve (62) to switch the backup park brake valve between its first and second configurations occurs automatically.

15. The method of any of claims 12 and 13, wherein actuation of the third solenoid valve (62) to switch the backup park brake valve between its first and second configurations is triggered by a driver.

## Amended claims

### Amended claims in accordance with Rule 137(2) EPC.

1. An electronically controlled pneumatic parking brake system (2) for a vehicle (4), wherein said system comprises
- at least one park brake actuator (9);
- a first electronic control unit (10);
- a second electronic control unit (11);
- an electronic park brake device (6) controlled by the first electronic control unit and comprising
• at least one bi-stable relay valve (14; 114) configured for selectively feeding the at least one park brake actuator (9) with air under pressure;
• a source of air under pressure (12) for feeding air under pressure to each bi-stable relay valve, via a respective supply line (18; 118);
• at least one pair of first and second solenoid valves (40, 42; 140, 142) piloted by the first electronic control unit (10) for controlling the bi-stable relay valve via a control line (30; 130);
• at least one backup pneumatic park brake valve (52; 152) configured to take, depending on the pressure within the source of air under pressure (12), a first configuration where it is able to isolate the control line from the outside and a second configuration where it is able to purge the control line to the atmosphere;
- a third solenoid valve (62; 162), external to the electronic park brake device (6), piloted by the second electronic control unit (70), fed by air from the source of air under pressure (12) and configured to control the backup pneumatic park brake valve (52; 152) for switching between its first and second configurations;
- a fourth solenoid valve (82; 182), piloted by the first electronic control unit (10) and which selectively connects the control line (30; 130) to the backup park brake valve (52; 152);
wherein the first electronic control unit (10) is configured to pilot the fourth solenoid valve (82; 182) to isolate the control line (30; 130) from the backup park brake valve (52; 152) if the third solenoid valve (62; 162) is controlling the backup pneumatic park brake valve to take its second configuration when the first electronic control unit is operational.

2. The electronically controlled pneumatic parking brake system of claim 1, further comprising a pressure sensor (50; 150) for sensing an air pressure in the control line (30; 130).

3. The electronically controlled pneumatic parking brake system of any of claims 1-2, further comprising a pressure sensor (80) for sensing an air pressure in a pilot line (66; 166) of the backup pneumatic park brake valve (52; 152).

4. The electronically controlled pneumatic parking brake system of any of claims 1-3, wherein, when not actuated, the third solenoid valve (62; 162) connects a pilot line (66; 166) of the backup pneumatic park brake valve (52; 152) to the atmosphere and wherein, when it is actuated, the third solenoid valve connects the source of air under pressure (12) to the pilot line of the backup pneumatic park brake valve.

5. The electronically controlled pneumatic parking brake system of any of claims 1-3, wherein, when not actuated, the third solenoid valve (62; 162) connects the source of air under pressure (12) to a pilot line (66; 166) of the backup pneumatic park brake valve (52; 152) and wherein, when it is actuated, the third solenoid valve connects the pilot line of the backup pneumatic park brake valve to the atmosphere.

6. The electronically controlled pneumatic parking brake system of claim 5, further comprising a select low valve (90) interposed on the pilot line (66), between the backup pneumatic park brake valve (52) and the third solenoid valve (62).

7. The electronically controlled pneumatic parking brake system of any of claims 1-6, wherein, when not actuated, the fourth solenoid valve (82; 182) connects the control line (30; 130) to the backup pneumatic park brake valve (52; 152) and wherein, when it is actuated by the first ECU (10), the fourth solenoid valve isolates the control line from the backup pneumatic park brake valve.

8. The electronically controlled pneumatic parking brake system of any of claims 1-7, wherein, when it is supplied with control air under pressure above a given threshold value, the backup pneumatic park brake valve (52; 152) is closed and wherein,, when it is supplied with control air under pressure below the given threshold value, the backup pneumatic park brake valve connects the fourth solenoid valve (82; 182) to the atmosphere.

9. The electronically controlled pneumatic parking brake system of any of claims 1-8, wherein the electronic park brake device (6) is compatible with human-controlled venting of the source of air under pressure (12) by actuation of a service brake.

10. The electronically controlled pneumatic parking brake system of any of claims 1-9, wherein the electronic park brake device (6) includes at least two bi-stable relay valves (14, 114), one backup pneumatic park brake valve (52; 152) for each bi-stable relay valve and a single third solenoid valve (62) to control all backup pneumatic park brake valve (52; 152).

11. A vehicle (4) comprising the electronically controlled pneumatic parking brake system (2) according to any of claims 1-10.

12. A method for electronically controlling a pneumatic parking brake system (2) comprising
- at least one park brake actuator (9);
- a first electronic control unit (10);
- a second electronic control unit (70);
- an electronic park brake device (6) controlled by the first electronic control unit and comprising
• at least one bi-stable relay valve (14; 114) configured for selectively feeding the at least one park brake actuator with air under pressure;
• a source of air under pressure (12) for feeding air under pressure to each bi-stable relay valve, via a respective supply line (18; 118);
• at least one pair first and second solenoid valves (40, 42; 140, 142) piloted by the first electronic control unit (10) for controlling the bi-stable relay valve via a control line (30; 130);
• at least one backup pneumatic park brake valve (52; 152) configured to take, depending on the pressure within the source of air under pressure (12), a first configuration where it is able to isolate the control line from the outside and a second configuration where it is able to purge the control line to the atmosphere;
- a third solenoid valve (62), external to the electronic park brake device (6), piloted by the second electronic control unit (70), fed by air from the source of air under pressure (12) and configured to control the backup park brake valve (52; 152) for switching between its first and second configurations;
- a fourth solenoid valve (82; 182), piloted by the first electronic control unit (10) and which selectively connects the control line (30; 130) to the backup park brake valve (52; 152);
the method comprising at least
a) piloting the fourth solenoid valve (82; 182) to isolate the control line (30; 130) from the backup park brake valve (52; 152) if the third solenoid valve (62) is controlling the backup pneumatic park brake valve to take its second configuration when the first electronic control unit (10) is operational.
b) piloting the fourth solenoid valve (82; 182) to connect the control line (30; 130) to the backup park brake valve (52; 152) when the first electronic control unit is not operational.

13. The method of claim 12, further comprising:
c) sensing a pressure within a pilot line (66; 166) of the backup pneumatic park brake valve (52; 152) to assess whether or not the third solenoid valve (62) is controlling the backup pneumatic park brake valve to take its second configuration.

14. The method of any of claims 12 and 13, wherein actuation of the third solenoid valve (62) to switch the backup park brake valve between its first and second configurations occurs automatically.

15. The method of any of claims 12 and 13, wherein actuation of the third solenoid valve (62) to switch the backup park brake valve between its first and second configurations is triggered by a driver.
